# EUROPÄISCHE PATENTSCHRIFT

(11) **EP 2 475 502 B1**
(45) Veröffentlichungstag und Bekanntmachung des Hinweises auf die Patenterteilung: **09.01.2013**
(21) Anmeldenummer: 10760214.6
(22) Anmeldetag: 09.09.2010
(51) Int. Cl.: B25J 19/00, B25J 19/06

(54) **KOLLISIONSSCHUTZEINRICHTUNG**
COLLISION PROTECTION DEVICE
DISPOSITIF ANTICOLLISION

(30) Priorität: 10.09.2009 AT 14262009
(43) Veröffentlichungstag der Anmeldung: 18.07.2012
(73) Patentinhaber: Fronius International GmbH, 4643 Pettenbach (AT)
(72) Erfinder: RICHTSFELD, Michael, A-4063 Hörsching (AT); EHRENBRANDNER, Stefan, 4553 Schlierbach (AT); TRAUNER, Gernot, A-4611 Buchkirchen (AT)
(74) Vertreter: Sonn & Partner Patentanwälte
(86) Internationale Anmeldenummer: PCT/AT2010/000324
(87) Internationale Veröffentlichungsnummer: WO 2011/029114

(56) Entgegenhaltungen:
- EP-A1- 1 543 915
- EP-A1- 1 932 630
- EP-A1- 1 970 171
- WO-A1-2009/080373
- AT-A4- 505 658
- US-A- 5 954 446

## Beschreibung

Die Erfindung betrifft eine Kollisionsschutzeinrichtung zur Verbindung eines mit einem Schlauchpaket verbundenen Schweißbrenners mit einem Roboterarm eines Schweißroboters, mit zwei lösbar über Magnete miteinander verbindbaren Kupplungselementen, wobei ein Kupplungselement zur Verbindung mit dem Schweißbrenner oder einer mit dem Schweißbrenner verbindbaren Brennerkupplung ausgebildet ist, und das andere Kupplungselement zur Verbindung mit dem Roboterarm ausgebildet ist, und die Kupplungselemente Öffnungen aufweisen.

Derartige Kollisionsschutzeinrichtungen bzw. Abschaltboxen dienen dazu, eine Kollision eines Schweißbrenners mit einem Hindernis während eines Schweißvorganges zu erkennen und eine Abschaltung der Roboteranlage vorzunehmen, um eine Beschädigung des Schweißbrenners und der Roboteranlage, aber auch anderer Teile, zu verhindern. Trifft der Schweißbrenner während des Schweißvorganges entlang einer vorgegebenen Bahn auf ein Hindernis, wird der Schweißbrenner gegenüber dem Roboterarm ausgelenkt, wodurch elektrische Kontakte in der Kollisionsschutzeinrichtung betätigt werden. Die Betätigung der elektrischen Kontakte wiederum führt zu einer möglichst umgehenden Abschaltung des Schweißgeräts bzw. der Roboteranlage, sodass weiterer Schaden und eine weitere Gefährdung verhindert werden kann.

Eine Kollisionsschutzeinrichtung des Standes der Technik mit magnetischer Kopplung der beiden Kupplungselemente der Kollisionsschutzeinrichtung ist beispielsweise aus der US 5,954,446 A bekannt. Nachteilig bei dieser Konstruktion ist, dass das Schlauchpaket des Schweißbrenners außerhalb des Roboterarmes geführt wird, was einerseits aufgrund der zusätzlich abstehenden Teile die Gefahr einer Kollision während des Schweißvorganges erhöht und andererseits das Ansprechverhalten der Kollisionsschutzeinrichtung beeinträchtigt. Ebenso werden keine Lösungen angegeben, wie der Brenner nach einer Kollision gehalten wird. Im Falle einer Kollision würde daher der Brenner herunterfallen, sodass dieser und allenfalls das Werkstück beschädigt oder zerstört werden könnte.

Eine weitere Konstruktion einer Kollisionsschutzeinrichtung ist aus der AT 411 882 B bekannt geworden, bei der die beiden Kupplungselemente der Abschaltbox über Federn gelenkig miteinander verbunden sind. Diese Konstruktion ist relativ aufwendig, obgleich das Ansprechverhalten durch das im Inneren der Kollisionsschutzeinrichtung verlaufende Schlauchpaket des Schweißbrenners verbessert wird.

Die EP 1 543 915 A1 beschreibt eine Kollisionsschutzeinrichtung eines Laserbearbeitungskopfes, deren Kupplungselemente magnetisch miteinander verbindbar sind und Öffnungen für die Durchführung des Laserstrahles aufweisen.

Die EP 1 970 171 A1 zeigt ein Robotergelenk, bei dem ein innerer Hohlraum vorgesehen ist, durch den Kabel bzw. Rohre hindurchgeführt werden können.

Die Aufgabe der vorliegenden Erfindung besteht in der Schaffung einer oben genannten Kollisionsschutzeinrichtung, welche sowohl durch einen kompakten Aufbau als auch ein optimales Ansprechverhalten ausgezeichnet ist. Die Konstruktion der Kollisionsschutzeinrichtung soll weitgehend abstehende Teile bzw. Leitungen zwischen dem Schweißbrenner und dem Roboterarm vermeiden, um auch die Zugänglichkeit zu den zu verschweißenden Werkstücken zu verbessern. Nachteile bekannter Konstruktionen sollen vermieden oder reduziert werden.

Gelöst wird die erfindungsgemäße Aufgabe durch eine oben genannte Kollisionsschutzeinrichtung, bei der die Öffnungen in den Kupplungselementen zur Durchführung des Schlauchpakets ausgebildet sind, und das mit dem Schweißbrenner oder der Brennerkupplung verbindbare Kupplungselement oder die Brennerkupplung Elemente zur Verbindung mit dem Schlauchpaket aufweist, während das Schlauchpaket in dem mit dem Roboterarm verbindbaren Kupplungselement beweglich angeordnet ist. Durch die Öffnungen in den beiden miteinander lösbar verbundenen Kupplungselementen wird das Schlauchpaket durch die Kollisionsschutzeinrichtung hindurch geführt, wodurch einerseits das Ansprechverhalten der Kollisionsschutzeinrichtung verbessert werden kann, aber auch außerhalb der Kollisionsschutzeinrichtung verlaufende Teile und Leitungen vermieden werden. Ebenso kann das Schlauchpaket in einfacher Weise vor der Durchführung eines Schweißprozesses mit dem Brenner verbunden werden, sodass dies nicht direkt am Roboter erfolgen muss. Dabei wird zumindest ein Teil des Schlauchpakets nach der Montage am Brenner durch den am Roboter befestigten Teil der Kollisionsschutzeinrichtung und den Roboter selbst eingefädelt, wodurch der am Roboter befestigte Teil der Kollisionsschutzeinrichtung im Wesentlichen nie demontiert werden muss. Des Weiteren wird zumindest über die verschiebbare Länge des Schlauchpakets definiert, wie weit sich die Kupplungselemente voneinander distanzieren können. Durch die Verbindungselemente wird eine Zugentlastung des üblichen Steckkontakts zwischen Schlauchpaket und Schweißbrenner geschaffen und verhindert, dass im Falle einer Kollision des Schweißbrenners mit einem Hindernis das Schlauchpaket vom Schweißbrenner getrennt wird.

Vorteilhafterweise ist über den Kupplungselementen der Kollisionsschutzeinrichtung ein Faltenbalg angeordnet, sodass die Kollisionsschutzeinrichtung vor Verschmutzung geschützt wird. Durch diesen Faltenbalg, der eine gewisse Elastizität aufweist, erfolgt dieser Schutz sowohl bei geschlossener als auch bei geöffneter Kollisionsschutzeinrichtung. Ebenso kann der Faltenbalg einen Teil des Gewichts des Schweißbrenners bei geöffneter Kollisionsschutzeinrichtung tragen. Der Faltenbalg ist vorzugsweise aus Kunststoffmaterial hergestellt und wird über die Kupplungselemente aufgesteckt bzw. damit verklebt, verschraubt oder mittels Klemmelemente, wie beispielsweise Schellen, befestigt. Werden für den Faltenbalg entsprechende Materialien verwendet und wird dieser entsprechend befestigt, kann bei einer Kollision bei geöffneter Kollisionsschutzeinrichtung das Gewicht des Brenners und der daran befestigten Kollisionsschutzeinrichtung vollständig getragen werden, wodurch keine Zugkräfte auf das Schlauchpaket ausgeübt werden.

Das mit dem Schweißbrenner oder der Brennerkupplung verbindbare Kupplungselement der Kollisionsschutzeinrichtung ist vorzugsweise durch zumindest einen Auflageflansch gebildet und mit einer Brenneraufnahme und allenfalls einem Schutzring verbunden. Der zumindest eine Auflageflansch ist zur Kontaktierung mit einem entsprechend magnetisierten Teil am gegenüberliegenden Kupplungselement, welches mit dem Roboterarm verbindbar ist, ausgebildet. Die Brenneraufnahme wird vorzugsweise so gestaltet, dass übliche Schweißbrenner mit dieser verbunden werden können. Anstelle einer direkten Verbindung des Schweißbrenners mit der Brenneraufnahme kann auch eine Brennerkupplung als Zwischenstück zwischen dem Schweißbrenner und der Brenneraufnahme verwendet werden. Der allfällige Schutzring schützt die Anordnung insbesondere vor Verschmutzung.

Die Brenneraufnahme ist vorzugsweise werkzeuglos, beispielsweise über einen Bajonettverschluss oder dgl., mit dem Schweißbrenner oder der Brennerkupplung verbindbar.

Der Schutzring des mit dem Schweißbrenner oder der Brennerkupplung verbindbaren Kupplungselements ist vorzugsweise aus magnetisch abschirmendem Material gebildet, wodurch die magnetische Anziehung von magnetisierbaren Partikeln und die dadurch bedingte Verschmutzung der Kollisionsschutzeinrichtung verringert werden kann.

Das mit dem Roboterarm verbindbare Kupplungselement der Kollisionsschutzeinrichtung ist vorzugsweise durch zumindest eine Grundplatte gebildet und mit einem Roboterflansch verbunden, wobei die zumindest eine Grundplatte und der Roboterflansch vorzugsweise über Schrauben miteinander verbunden sind. Der Roboterflansch des mit dem Roboterarm verbindbaren Kupplungselements bildet somit das Verbindungsglied zwischen der Kollisionsschutzeinrichtung und dem Roboterarm. Je nach Konstruktion des Roboterarms kann der Roboterflansch unterschiedlich ausgebildet sein. Jedenfalls verläuft das Schlauchpaket durch den Roboterflansch und durch die zumindest eine Grundplatte in den hohl ausgebildeten Roboterarm des Schweißroboters.

In der zumindest einen Grundplatte sind vorzugsweise Aufnahmen für die Magnete zur lösbaren Verbindung der Kupplungselemente vorgesehen. Die Magnete können verschiedene Gestalt aufweisen und sind vorzugsweise entlang dem Umfang der zumindest einen Grundplatte um die Öffnung für das Schlauchpaket herum angeordnet. Durch entsprechende Dimensionierung der Magnete kann die Empfindlichkeit der Kollisionsschutzeinrichtung eingestellt werden. Das heißt durch Variation der Anzahl der Magnete und/oder der Kraft der einzelnen Magnete. Ebenso können die Magnete einfach, ohne die Verwendung eines Klebemittels in die Aufnahmen gesteckt bzw. gepresst werden.

Um nach einer erfolgten Kollision die richtige Orientierung des Schweißbrenners in Bezug auf den Roboterarm sicherzustellen, sind die Kupplungselemente vorzugsweise über zumindest ein Positionierelement positioniert. Somit ist stets ein exakter "Tool Center Point (TCP)" gewährleistet. Das zumindest eine Positionierelement kann unterschiedlich gestaltet sein.

Beispielsweise kann das zumindest eine Positionierelement durch Positionierstifte an einem Kupplungselement und entsprechende Vertiefungen zur Aufnahme der Positionierstifte am anderen Kupplungselement gebildet sein.

Gemäß einem weiteren Merkmal der Erfindung ist vorgesehen, dass elektrische Kontakte derart in der Brennerkupplung angeordnet sind, dass bei Befestigung dieser Brennerkupplung am Schweißbrenner die Kontakte um das Schlauchpaket in der Öffnung des Auflageflansches positioniert sind und die Anschlussleitungen der Kontakte im Schlauchpaket geführt sind. Dadurch sind die elektrischen Kontakte, welche eine Abschaltung der Roboteranlage im Falle einer Kollision bewirken, optimal angeordnet. Die elektrischen Kontakte, welche in der Brennerkupplung angeordnet sind, wirken mit der Grundplatte des mit dem Roboterarm verbindbaren Kupplungselements zusammen. Im Gegensatz dazu sind üblicherweise elektrische Kontakte in der Kollisionsschutzeinrichtung roboterseitig angeordnet. Die brennerseitige Anordnung der elektrischen Kontakte ist von Vorteil.

Die Öffnungen der Kupplungselemente weisen vorzugsweise unterschiedlichen Durchmesser auf, sodass ein Kreisring bzw. eine ringförmige Stufe gebildet ist, welcher bzw. welche zur Kontaktierung von in einem Kupplungselement integrierten elektrischen Kontakten ausgebildet ist. Somit berühren die entsprechend angeordneten elektrischen Kontakte im geschlossenen Zustand der Kollisionsschutzeinrichtung den Kreisring und werden die elektrischen Kontakte durch die Kreisringfläche betätigt.

Die vorliegende Erfindung wird anhand der beigefügten Zeichnungen näher erläutert. Darin zeigen:
Fig. 1 eine perspektivische Ansicht eines über eine Kollisionsschutzeinrichtung an einem Hohlroboterarm angeschlossenen Schweißbrenners;
Fig. 2 die Draufsicht auf eine Ausführungsform einer erfindungsgemäßen Kollisionsschutzeinrichtung;
Fig. 3 ein Schnittbild durch eine Ausführungsform einer erfindungsgemäßen Kollisionsschutzeinrichtung;
Fig. 4 und Fig. 5 Explosionsdarstellungen der Kollisionsschutzeinrichtung;
Fig. 6 eine teilweise geschnittene Ansicht einer an einem Roboterarm befestigten Kollisionsschutzeinrichtung im Normalfall; und
Fig. 7 die Ansicht auf die Kollisionsschutzeinrichtung gemäß Fig. 6 im Fall einer Kollision des Schweißbrenners.

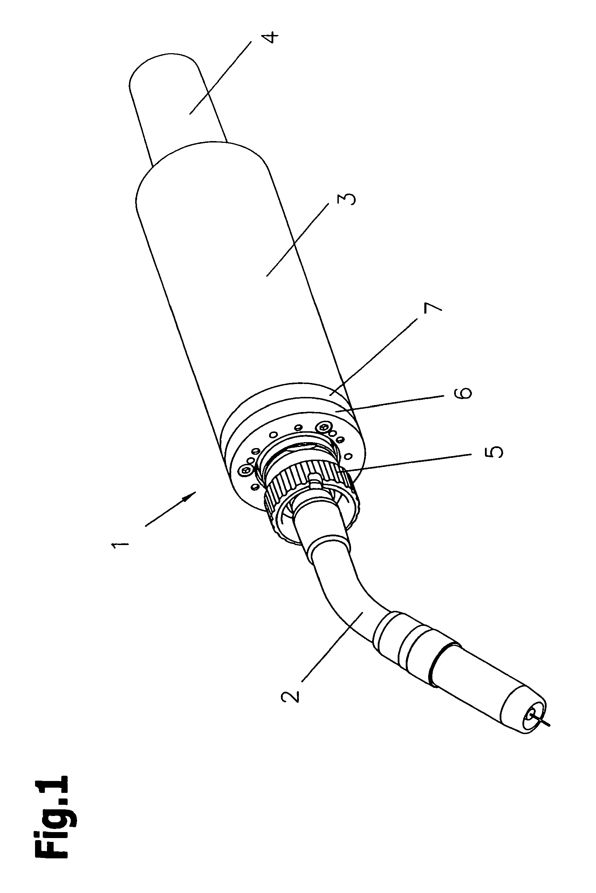

Fig. 1 zeigt eine perspektivische Ansicht einer erfindungsgemäßen Kollisionsschutzeinrichtung 1, welche aus zwei lösbar über Magnete (nicht dargestellt) miteinander verbindbaren Kupplungselementen 6, 7 besteht, wobei ein Kupplungselement 6 zur Verbindung mit dem Schweißbrenner 2 und/oder einer mit dem Schweißbrenner 2 verbindbaren Brennerkupplung 5 und das andere Kupplungselement 7 zur Verbindung mit dem Roboterarm 3 ausgebildet ist. Das Schlauchpaket 4 ist dabei durch den hohl ausgebildeten Roboterarm 3 und durch die hohl ausgebildete Kollisionsschutzeinrichtung 1 zum Schweißbrenner 2 geführt und mit diesem verbunden.

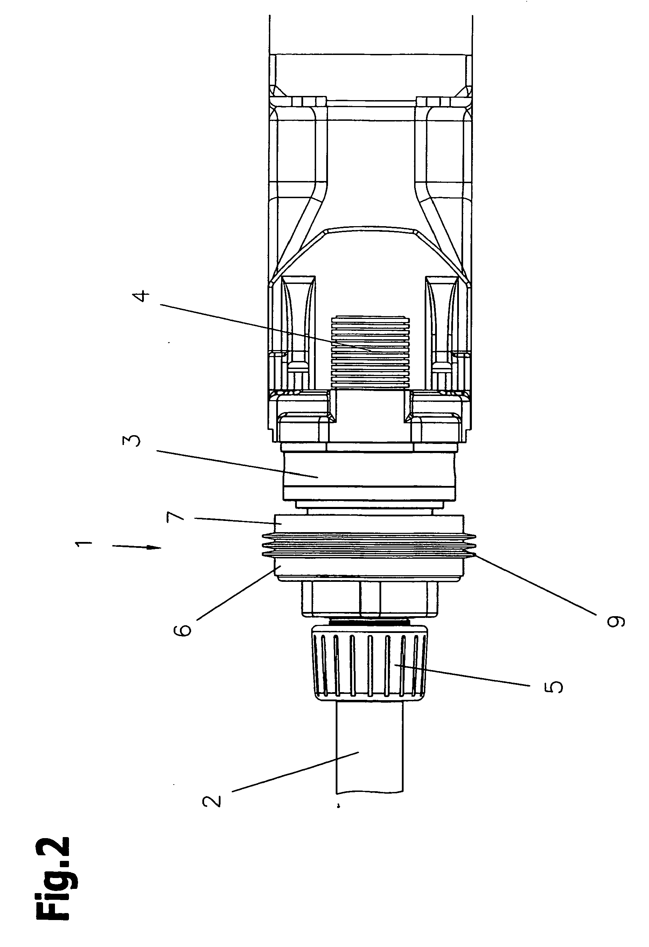

Fig. 2 zeigt eine Draufsicht auf eine Kollisionsschutzeinrichtung 1, wobei über den beiden Kupplungselementen 6, 7 ein Faltenbalg 9 angeordnet ist. Dieser Faltenbalg 9, welcher vorzugsweise aus elastischem Kunststoffmaterial besteht, verhindert eine Verschmutzung der Kollisionsschutzeinrichtung 1 und hält im Wesentlichen mit dem Schlauchpaket 4 den gelösten Schweißbrenner 2. Gegebenenfalls kann der Faltenbalg 9 durch seine Elastizitätdie beiden Kupplungselemente 6, 7 nach einem Kollisionsfall des Schweißbrenners 2 zumindest bis zu einem gewissen Grad selbstständig wieder in die miteinander verbundene Stellung überführen.

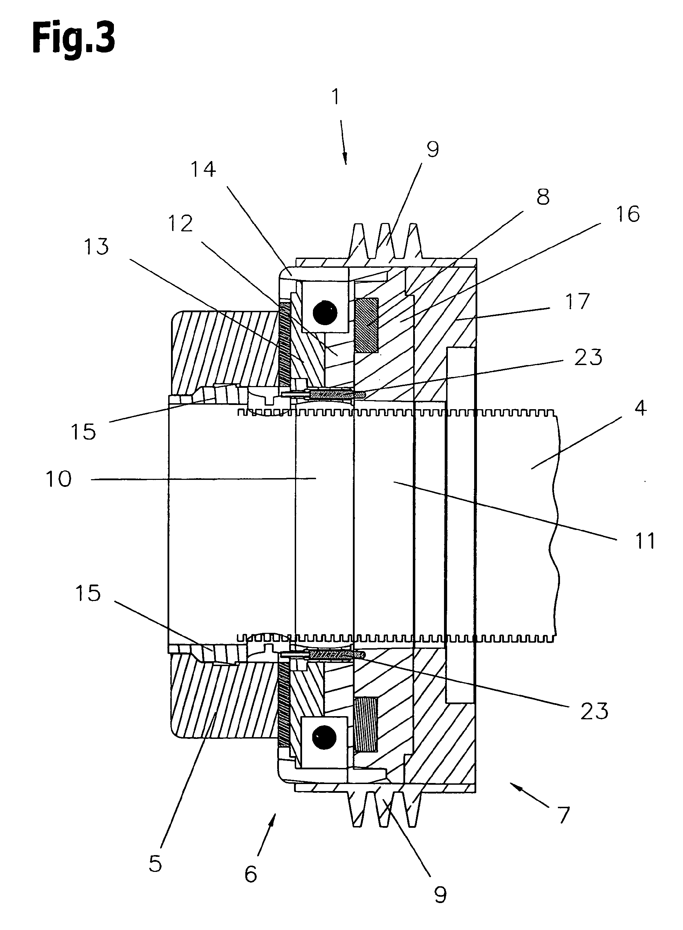

Die Schnittbilddarstellung einer Ausführungsform der Kollisionsschutzeinrichtung 1 gemäß Fig. 3 zeigt Details der Kollisionsschutzeinrichtung 1, wie die mit der Kollisionsschutzeinrichtung 1 bzw. dem Kupplungselement 6 derselben verbundene Brennerkupplung 5. Mit dieser Brennerkupplung 5 kann der Schweißbrenner 2, vorzugsweise werkzeuglos, verbunden werden. Das Kupplungselement 6 der Kollisionsschutzeinrichtung 1, welches zur Verbindung mit dem Schweißbrenner 2 bzw. der Brennerkupplung 5 ausgebildet ist, umfasst drei Bestandteile, nämlich zumindest einen Auflageflansch 12, der mit einer Brenneraufnahme 13 und einem Schutzring 14 verbunden ist. Das weitere Kupplungselement 7 der Kollisionsschutzeinrichtung 1 besteht aus zumindest einer Grundplatte 16, in welcher die Magnete 8 angeordnet sind, welche mit einem Roboterflansch 17, der zur Verbindung mit dem Roboterarm 3 (nicht dargestellt) ausgebildet ist, verbunden werden kann. Erfindungsgemäß sind beide Kupplungselemente 6, 7 bzw. deren genannte Bestandteile mit Öffnungen 10, 11 zur Durchführung des Schlauchpakets 4 (strichliert eingezeichnet) ausgebildet. Zusätzlich ist an der Brennerkupplung 5 vorzugsweise ein Element 15 zur Verbindung mit dem Schlauchpaket 4 angeordnet. Dieses Verbindungselement 15 kann beispielsweise in Rillen an der Außenseite des Schlauchpakets 4, wie in Fig. 2 ersichtlich, einrasten und somit das Schlauchpaket 4 mit der Brennerkupplung 5 verbinden. Die Verbindungselemente 15 sind vorzugsweise aus Kunststoff hergestellt. Somit ist das Schlauchpaket 4 im Kupplungselement 7 beweglich bzw. verschiebbar und im Kupplungselement 6 fixiert. Weiters sind die elektrischen Kontakte 23 erkennbar, die in der dargestellten Ausführungsvariante in der Brennerkupplung 5 angeordnet sind und entsprechend in das Kupplungselement 6 ragen. Dabei sind die Kontakte 23 am Rand der Öffnung 10 des Auflageflansches 12 angeordnet, sodass diese außerhalb des Schlauchpakets 4 liegen. Entsprechend werden hingegen die Anschlussleitungen der elektrischen Kontakte 23 im Schlauchpaket 4 geführt. Vorzugsweise haben die Öffnungen 10 bzw. 11 einen unterschiedlichen Durchmesser. Konkret ist die Öffnung 11 der Grundplatte 16 kleiner. Auf dem Kreisring, welcher entsprechend aus der Differenz der Durchmesser resultiert, kontaktieren die elektrischen Kontakte 23 die Grundplatte 16. Somit stellt die Grundplatte 16 eine Verbindung zwischen den zumindest zwei elektrischen Kontakten 23 her, wodurch der Stromkreis geschlossen ist, wenn die Kupplungselemente 6, 7 geschlossen sind und keine Kollision aufgetreten ist. Werden die Kupplungselemente 6, 7 im Falle einer Kollision des Schweißbrenners 2 voneinander gelöst, wird zumindest ein elektrischer Kontakt 23 von der Grundplatte 16 getrennt und der Stromkreis unterbrochen, wodurch der Schweißroboter augenblicklich deaktiviert werden kann. Selbstverständlich können auch mehrere elektrische Kontakte 23 entlang des Umfanges der Kollisionsschutzeinrichtung 1 angeordnet sein.

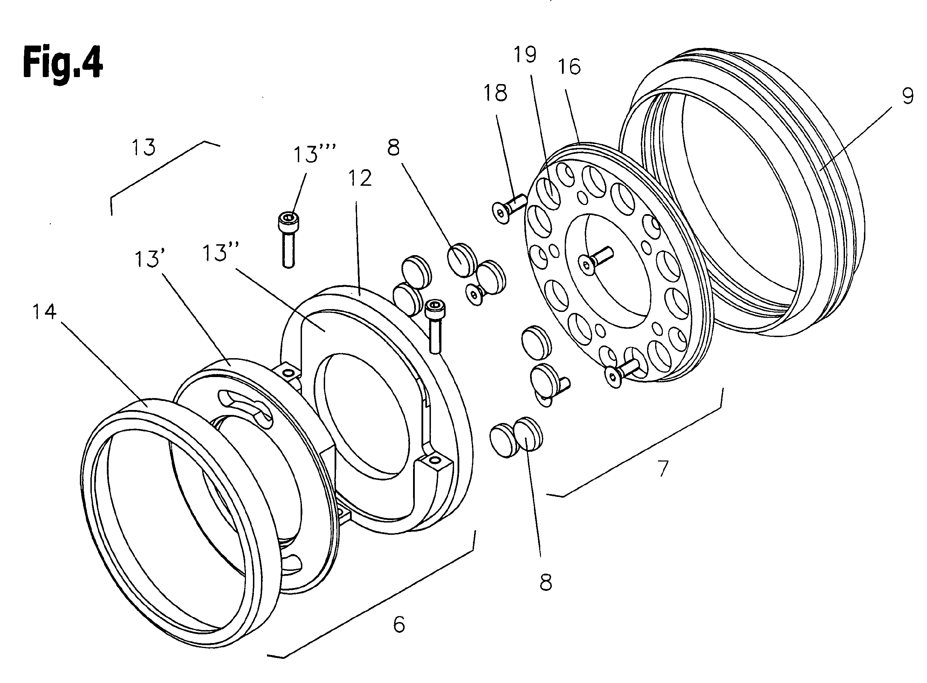

Fig. 4 zeigt eine Explosionsdarstellung einer Kollisionsschutzeinrichtung 1, wobei die Brenneraufnahme 13 des Kupplungselements 6, welches mit dem Schweißbrenner 2 bzw. der Brennerkupplung 5 verbunden wird, aus zwei Teilen 13' und 13" besteht, welche mit Schrauben 13"' miteinander verbunden werden. Die Befestigung mit dem Auflageflansch 12 erfolgt beispielsweise derart, dass der Teil 13" in eine Nut des Auflageflansches 12 geschoben wird und der Teil 13' von oben in eine Nut des Auflageflansches 12 geschoben wird. Über die Schrauben 1"' werden nun die zwei Teile 13' und 13" miteinander verschraubt, sodass diese am Auflageflansch 12 fixiert sind. Somit resultiert im Wesentlichen eine plane Auflagefläche für die Magnete 8 im Auflageflansch 12. Durch diese zweiteilige Ausführungsform der Brenneraufnahme 13 kann diese in einfacher Weise an den Brenner 2 angepasst werden. Im Teil 13' der Brenneraufnahme 13 sind Öffnungen zur werkzeuglosen Befestigung der Brennerkupplung 5 bzw. des Schweißbrenners 2 integriert. Das Kupplungselement 7, welches zur Verbindung mit dem Roboterarm 3 ausgebildet ist, enthält entsprechende Aufnahmen 19 für die Magnete 8 in der Grundplatte 16. Die Grundplatte 16 und der Roboterflansch 17 (nicht dargestellt) werden vorzugsweise über Schrauben 18 miteinander verbunden.

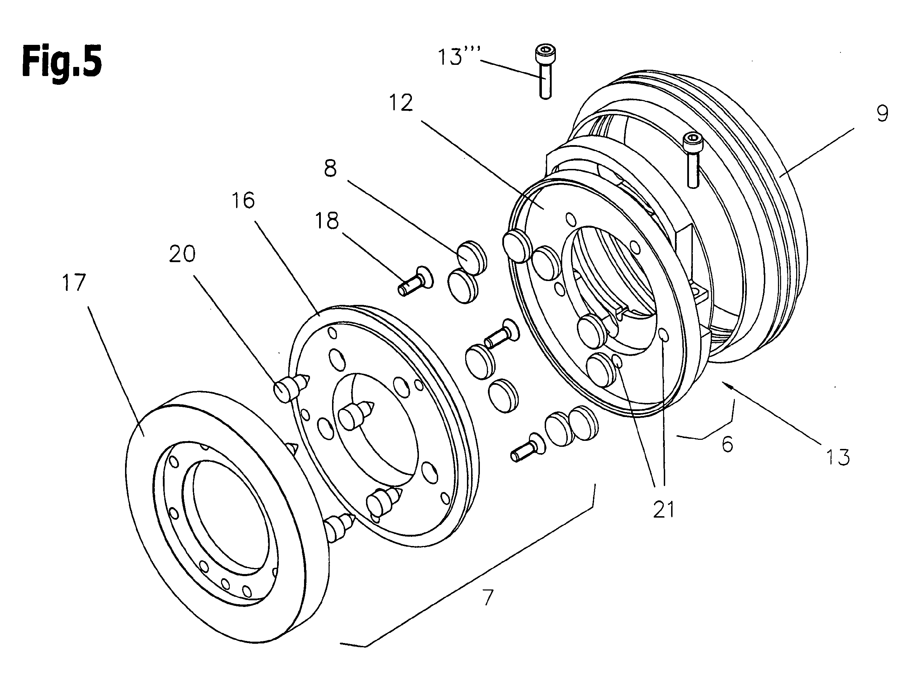

Gemäß der Explosionsdarstellung der Kollisionsschutzeinrichtung 1 in Fig. 5 (von der Seite des Roboterarms 3 aus gesehen) sind bevorzugt Positionierstifte 20, wie zwischen dem Roboterflansch 17 und der Grundplatte 16 dargestellt, im Kupplungselement 7 angeordnet. Diese sind entsprechend in der Grundplatte 16 auf der Seite des Roboterflansches 17 befestigt und ragen auf der Seite des Auflageflansches 12 aus der Grundplatte 16 heraus, sodass die Positionierstifte 20 bei ordnungsgemäßer Positionierung der Kupplungselemente 6, 7 in entsprechenden Aufnahmen 19 im Auflageflansch 12 des Kupplungselements 6 einrasten. Natürlich können auch andere Konstruktionen von Positionierelementen verwendet werden, um sicherzustellen, dass der Schweißbrenner 2 gegenüber dem Roboterarm 3 richtig orientiert ist und der sogenannte "Tool Center Point (TCP)" gegeben ist.

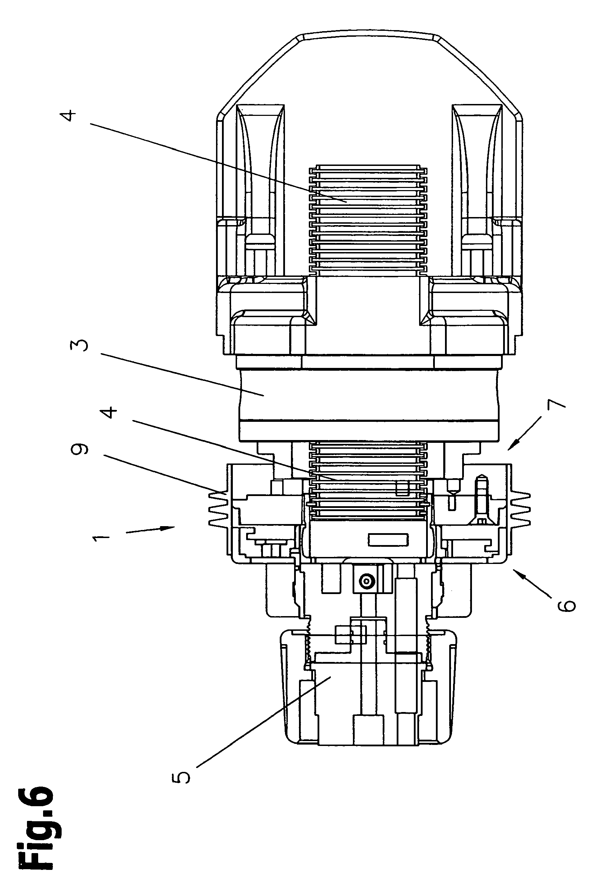

Die teilweise geschnittene Draufsicht auf eine Anordnung der Kollisionsschutzeinrichtung 1 an einem Roboterarm 3 mit Brennerkupplung 5 gemäß Fig. 6 zeigt den Fall einer ordnungsgemäß verlaufenden Schweißung, wobei die beiden Kupplungselemente 6, 7 der Kollisionsschutzeinrichtung 1 miteinander verbunden sind.

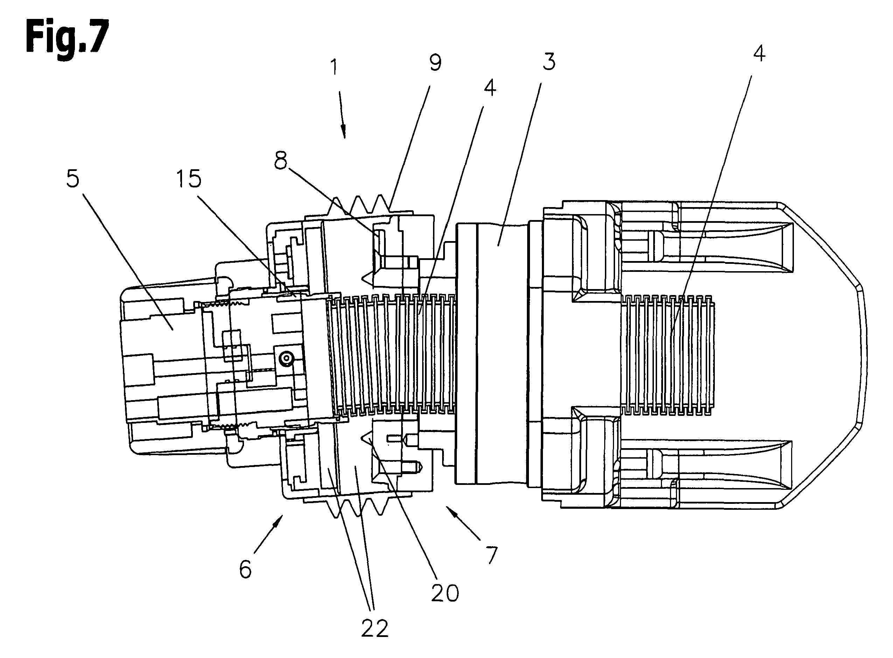

Im Kollisionsfall gemäß Fig. 7 werden die beiden Kupplungselemente 6, 7 der Kollisionss-chutzeinrichtung 1 voneinander getrennt, wobei sich der Faltenbalg 9 dehnt und das Schlauchpaket 4 durch das Kupplungselement 7 gezogen wird. Dabei wird der an der Brennerkupplung 5 befestigte Brenner 2 im Wesentlichen vom Schlauchpaket 4 und teilweise vom Faltenbalg 9 gehalten. Dementsprechend wird zwischen den beiden Kupplungselementen 6, 7 ein Luftraum 22 gebildet. Ebenso werden durch die Lösung der Kupplungselemente 6, 7 natürlich auch die elektrischen Kontakte 23 (nicht dargestellt) betätigt bzw. der Stromkreis unterbrochen, wodurch eine Abschaltung der Schweißanlage veranlasst wird. In Fig. 7 sind auch die Positionierstifte 20 erkennbar, welche durch die Lösung der beiden Kupplungselemente 6, 7 aus den entsprechenden Aufnahmen 19 herausbewegt werden. Beim Zusammenfügen der Kupplungselemente 6, 7 der Kollisionsschutzeinrichtung 1, welche auch durch die Elastizität des Faltenbalgs 9 selbstständig erfolgen kann, sorgen die Positionierstifte 20 dafür, dass der Schweißbrenner 2 gegenüber dem Roboterarm 3 ordnungsgemäß ausgerichtet ist. Natürlich kann die Repositionierung des Schweißbrenners 2 am Roboterarm 3 auch von Hand aus erfolgen. Durch die Magnete 8 in der Kollisionsschutzeinrichtung 1 wird dann wiederum ein selbstständiger Halt der Kollisionsschutzeinrichtung 1 sichergestellt.

Die dargestellten Abbildungen zeigen nur Beispiele von Ausführungsformen der Kollisionsschutzeinrichtung 1, welche natürlich im Rahmen des durch die Ansprüche definierten Schutzumfangs entsprechend abgewandelt sein können. Ebenso ist die Kollisionsschutzeinrichtung 1 auch für einen Schneidbrenner, Reinigungsbrenner, Plasmabrenner oder dergleichen einsetzbar.

## Patentansprüche

1. Kcllisionsschutzeinrichtung (1) zur Verbindung eines mit einem Schlauchpaket (4) verbundenen Schweißbrenners (2) mit einem Roboterarm (3) eines Schweißroboters, mit zwei lösbar über Magnete (3) miteinander verbindbaren Kupplungselementen (6, 7), wobei ein Kupplungselement (6) zur Verbindung mit dem Schweißbrenner (2) oder einer mit dem Schweißbrenner (2) verbindbaren Brennerkupplung (5) ausgebildet ist, und das andere Kupplungselement (7) zur Verbindung mit dem Roboterarm (3) ausgebildet ist, und die Kupplungselemente (6, 7) Öffnungen (10, 11) aufweisen, **dadurch gekennzeichnet, dass** die Öffnungen (10, 11) in den Kupplungselementen (6, 7) zur Durchführung des Schlauchpakets (4) ausgebildet sind, und das mit dem Schweißbrenner (2) oder der Brennerkupplung (5) verbindbare Kupplungselement (6) oder die Brenncrkupplung (5) Elemente (15) zur Verbindung mit dem Schlauchpaket (4) aufweist, während das Schlauchpaket (4) in dem mit dem Roboterarm (3) verbindbaren Kupplungselement (7) beweglich angeordnet ist.

2. Kollisionsschutzeinrichtung (1) nach Anspruch 1, **dadurch gekennzeichnet, dass** über den Kupplungselementen (6, 7) ein Faltenbalg (9) angeordnet ist.

3. Kollisionsschutzeinrichtung (1) nach Anspruch 1 oder 2, **dadurch gekennzeichnet, dass** das mit dem Schweißbrenner (2) oder der Brennerkupplung (5) verbindbare Kupplungselement (6) durch zumindest einen Auflageflansch (12) gebildet ist und mit einer Brenneraufnahme (13) und allenfalls einem Schutzring (14) verbunden ist.

4. Kollisionsschutzeinrichtung (1) nach Anspruch 3, **dadurch gekennzeichnet, dass** die Brenneraufnahme (13) werkzeuglos, vorzugsweise über einen Bajonettverschluss oder dgl., mit dem Schweißbrennerr (2) oder der Brennerkupplung (5) verbindbar ist.

5. Kollisionsschutzeinrichtung (1) nach Anspruch 3 oder 4, **dadurch gekennzeichnet, dass** der Schutzring (14) aus magnetisch abschirmendem Material gebildet ist.

6. Kollisionsschutzeinrichtung (1) nach einem der Ansprüche 1 bis 5, **dadurch gekennzeichnet, dass** das mit dem Roboterarm (3) verbindbare Kupplungselement (7) durch zumindest eine Grundplatte (16) gebildet ist und mit einem Roboterflansch (17) verbunden ist, wobei die zumindest eine Grundplatte (16) und der Roboterflansch (17), vorzugsweise über Schrauben (18), miteinander verbunden sind.

7. Kollisionsschutzeinrichtung (1) nach Anspruch 6, **dadurch gekennzeichnet, dass** in der zumindest einen Grundplatte (16) Aufnahmen (19) für die Magnete (8) zur lösbaren Verbindung der Kupplungselemente (6, 7) vorgesehen sind.

8. Kollisionsschutzeinrichtung (1) nach einem der Ansprüche 1 bis 7, **dadurch gekennzeichnet, dass** die Kupplungselemente (6, 7) über zumindest ein Positionierelement positioniert sind.

9. Kollisionsschutzeinrichtung (1) nach Anspruch 8, **dadurch gekennzeichnet, dass** das zumindest eine Positionierelement durch Positionierstifte (20) an einem Kupplungselement (7) und Vertiefungen (21) zur Aufnahme der Positionierstifte (20) am anderen Kupplunqselement (6) gebildet ist.

10. Kollisionsschutzeinrichtung (1) nach einem der Ansprüche 3 bis 9, **dadurch gekennzeichnet, dass** elektrische Kontakte (23) derart in der Brennerkupplung (5) angeordnet sind, dass bei Befestigung dieser die Kontakte (23) um das Schlauchpaket (4) in der Öffnung (10) des Auflageflanschs (12) positioniert sind und die Anschlussleitungen der Kontakte (23) im Schlauchpaket (4) geführt sind.

11. Kollisionsschutzeinrichtung (1) nach einem der Ansprüche 1 bis 10, **dadurch gekennzeichnet, dass** die Öffnungen (10, 11) in den Kupplungselementen (6, 7) unterschiedliche Durchmesser aufweisen, sodass ein Kreisring gebildet ist, welcher zur Kontaktierung von in einem Kupplungselement (6) integrierten elektrischen Kontakten (23) ausgebildet ist.

## Claims

1. A collision protection device (1) for connecting a welding torch (2) connected to a hose pack (4) to a robot arm (3) of a welding robot, comprising two coupling elements (6, 7) that are adapted to be detachably connected to each other by means of magnets (8), wherein one coupling element (6) is designed to be connected to the welding torch (2) or to a torch coupling (5) that is adapted to be connected to the welding torch (2), and the other coupling element (7) is designed to be connected to the robot arm (3), and the coupling elements (6, 7) have openings (10, 11), **characterized in that** the openings (10, 11) in the coupling elements (6, 7) are designed for feeding through the hose pack (4), and that the coupling element (6) that is adapted to be connected to the welding torch (2) or to the torch coupling (5), or the torch coupling (5) comprises elements (15) to be connected to the hose pack (4), while the hose pack (4) in the coupling element (7) that is adapted to be connected to the robot arm (3) is arranged to be moved.

2. The collision protection device (1) according to claim 1, **characterized in that** bellows (9) are arranged over the coupling elements (6, 7).

3. The collision protection device (1) according to claims 1 or 2, **characterized in that** the coupling element (6) that is adapted to be connected to the welding torch (2) or the torch coupling (5) is formed by at least one support flange (12) and is connected to a torch attachment (13) and possibly a protective ring (14).

4. The collision protection device (1) according to claim 3, **characterized in that** the torch attachment (13) is adapted to be connected to the welding torch (2) or the torch coupling (5) without any tool, preferably by a bayonet lock or the like.

5. The collision protection device (1) according to claims 3 or 4, **characterized in that** the protective ring (14) is formed of a magnetically shielding material.

6. The collision protection device (1) according to any of claims 1 to 5, **characterized in that** the coupling element (7) that is adapted to be connected to the robot arm (3) is formed by at least one base plate (16) and is connected to a robot flange (17), wherein the at least one base plate (16) and the robot flange (17) are connected to each other preferably by means of screws.

7. The collision protection device (1) according to claim 6, **characterized in that** accommodations (19) for the magnets (8) are provided in the at least one base plate (16) for the detachable connection of the coupling elements (6, 7).

8. The collision protection device (1) according to any of claims 1 to 7, **characterized in that** the coupling elements (6, 7) are positioned via at least one positioning element.

9. The collision protection device (1) according to claim 8, **characterized in that** the at least one positioning element is formed by positioning pins (20) at one coupling element (7) and recesses (21) for receiving the positioning pins (20) at the other coupling element (6).

10. The collision protection device (1) according to any of claims 3 to 9, **characterized in that** electrical contacts (23) are arranged in the torch coupling (5) such that on fastening thereof the contacts (23) are positioned around the hose pack (4) in the opening (10) of the support flange (12) and the connecting lines of the contacts (23) are guided in the hose pack (4).

11. The collision protection device (1) according to any of claims 1 to 10, **characterized in that** the openings (10, 11) in the coupling elements (6, 7) are of different diameters, so that a circular ring is formed that is designed to contact electrical contacts (23) integrated in a coupling element (6).

## Revendications

1. Dispositif anticollision (1) pour l'assemblage d'un chalumeau de soudage (2), assemblé à un groupe de flexibles (4), à un bras de robot (3) d'un robot de soudage, avec deux éléments d'accouplement (6, 7) pouvant être assemblés entre eux de manière amovible via des aimants (8), dans lequel un élément d'accouplement (6) est conçu pour être assemblé au chalumeau de soudage (2) ou à un accouplement de chalumeau (5) pouvant être assemblé au chalumeau de soudage (2), et l'autre élément d'accouplement (7) est conçu pour être assemblé au bras de robot (3) et les éléments d'accouplement (6, 7) présentent des ouvertures (10, 11), **caractérisé en ce que** les ouvertures (10, 11) dans les éléments d'accouplement (6, 7) sont conçues pour le passage du groupe de flexibles (4), et l'élément d'accouplement (6) pouvant être assemblé au chalumeau de soudage (2) ou à l'accouplement de chalumeau (5), ou l'accouplement de chalumeau (5), présente des éléments (15) pour un assemblage au groupe de flexibles (4), tandis que le groupe de flexibles (4) est agencé de manière mobile dans l'élément d'accouplement (7) pouvant être assemblé au bras de robot (3).

2. Dispositif anticollision (1) selon la revendication 1, **caractérisé en ce qu'**un soufflet (9) est agencé sur les éléments d'accouplement (6, 7).

3. Dispositif anticollision (1) selon la revendication 1 ou 2, **caractérisé en ce que** l'élément d'accouplement (6) pouvant être assemblé au chalumeau de soudage (2) ou à l'accouplement de chalumeau (5) est formé par au moins une bride de support (12) et est assemblé à un logement de chalumeau (13) et éventuellement à une bague de protection (14).

4. Dispositif anticollision (1) selon la revendication 3, **caractérisé en ce que** l'élément récepteur de chalumeau (13) peut être assemblé sans outil, de préférence au moyen d'un emboîtement à baïonnette ou analogue, au chalumeau de soudage (2) ou à l'accouplement de chalumeau (5).

5. Dispositif anticollision (1) selon la revendication 3 ou 4, **caractérisé en ce que** la bague de protection (14) est formée dans un matériau magnétiquement protecteur.

6. Dispositif anticollision (1) selon l'une des revendications 1 à 5, **caractérisé en ce que** l'élément d'accouplement (7) pouvant être assemblé au bras de robot (3) est formé par au moins une plaque de base (16) et est assemblé à une bride de robot (17), dans lequel la au moins une plaque de base (16) et la bride de robot (17) sont assemblées l'une à l'autre de préférence au moyen de vis (18).

7. Dispositif anticollision (1) selon la revendication 6, **caractérisé en ce que** des logements (19) pour les aimants (8) destinés à l'assemblage amovible des éléments d'accouplement (6, 7) sont prévus dans la au moins une plaque de base (16).

8. Dispositif anticollision (1) selon l'une des revendications 1 à 7, **caractérisé en ce que** les éléments d'accouplement (6, 7) sont positionnés au moyen d'au moins un élément de positionnement.

9. Dispositif anticollision (1) selon la revendication 8, **caractérisé en ce que** le au moins un élément de positionnement est formé par des broches de positionnement (20) contre un élément d'accouplement (7) et des renfoncements (21) pour loger les broches de positionnement (20) contre l'autre élément d'accouplement (6).

10. Dispositif anticollision (1) selon l'une des revendications 3 à 9, **caractérisé en ce que** des contacts électriques (23) sont agencés dans l'accouplement de chalumeau (5) de telle sorte que, lors de la fixation de ce dernier, les contacts (23) sont positionnés autour du groupe de flexibles (4) dans l'ouverture (10) de la bride de support (12) et les lignes de raccordement des contacts (23) sont guidées dans le groupe de flexibles (4).

11. Dispositif anticollision (1) selon l'une des revendications 1 à 10, **caractérisé en ce que** les ouvertures (10, 11) dans les éléments d'accouplement (6, 7) présentent des diamètres différents, de sorte qu'est formée une couronne qui est conçue pour la mise en contact de contacts électriques (23) intégrés dans un élément d'accouplement (6).
